# EUROPEAN PATENT APPLICATION

(11) **EP 4 443 791 A1**
(43) Date of publication of application: **09.10.2024**
(21) Application number: 23167041.5
(22) Date of filing: 06.04.2023
(51) Int. Cl.: H04L 1/1822, H04L 1/1867

(54) **HARQ PROCESS HANDLING FOR MULTI-PUSCHS CG**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

Provided are a communication apparatus, a scheduling node, and corresponding methods. The communication apparatus comprises a transceiver, which, in operation, receives one or more signals conveying a configured grant for a periodic time pattern of one or more transmission occasions, TOs for an uplink shared channel, and a configuration of a minimum time period for reusing a hybrid automatic repeat request, HARQ, process identifier, HP ID associated with the one or more TOs. The communication apparatus further comprises circuitry, which, in operation, assigns, to a first uplink transmission to be transmitted on a first TO among the one or more TOs, a first HP ID. The transceiver, in operation, transmits the first uplink transmission on the first TO using the first HP ID, and the circuitry, in operation, releases the first HP ID upon expiry of the minimum time period for reusing the HP ID.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates efficient handling of configured grant uplink transmissions.

In an embodiment, the techniques disclosed here feature a communication apparatus. The communication apparatus comprises a transceiver, which, in operation, receives one or more signals conveying a configured grant for a periodic time pattern of one or more transmission occasions, TOs for an uplink shared channel, and a configuration of a minimum time period for reusing a hybrid automatic repeat request, HARQ, process identifier, HP ID associated with the one or more TOs. The communication apparatus further comprises circuitry, which, in operation, assigns, to a first uplink transmission to be transmitted on a first TO among the one or more TOs, a first HP ID. The transceiver, in operation, transmits the first uplink transmission on the first TO using the first HP ID, and the circuitry, in operation, releases the first HP ID upon expiry of the minimum time period for reusing the HP ID to be reused for a second uplink transmission.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a nonroaming scenario;
- **Fig. 6**: is a schematic drawing showing a time pattern of multi-PUSCHs configured grant transmission occasions (TOs) within a time period;
- **Fig. 7A**: is a schematic drawing showing assignment of a single HARQ process ID to multi-PUSCHs CG TOs;
- **Fig. 7B**: is a schematic drawing showing assignment of different and multiple HARQ process IDs (HP IDs) to multi-PUSCHs CG TOs;
- **Fig. 8**: is a block diagram showing a communication apparatus and a scheduling node;
- **Fig. 9**: is a block diagram showing processing circuitry of a communication apparatus;
- **Fig. 10**: is a block diagram showing processing circuitry of a scheduling node;
- **Fig. 11**: is a flow chart showing method steps of a communication method for a communication apparatus;
- **Fig. 12**: is a flow chart showing method steps of a communication method for a communication apparatus;
- **Fig. 13**: is a flow chart showing method steps of a communication method for a scheduling node;
- **Fig. 14**: is a flow chart showing method steps of a communication method for a scheduling node;
- **Fig. 15**: is a schematic drawing illustrating assignment of HP IDs to transmissions of a plurality of CG PUSCHs;
- **Fig. 16**: is a schematic drawing illustrating assignment of HP IDs to transmissions of a plurality of CG PUSCHs;
- **Fig. 17**: is a schematic drawing illustrating assignment of HP IDs to transmissions of a plurality of CG PUSCHs;
- **Fig. 18**: is a schematic drawing illustrating assignment of HP IDs to transmissions of a plurality of CG PUSCHs;
- **Fig. 19**: is a schematic drawing illustrating assignment of HP IDs to transmissions of a plurality of CG PUSCHs.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

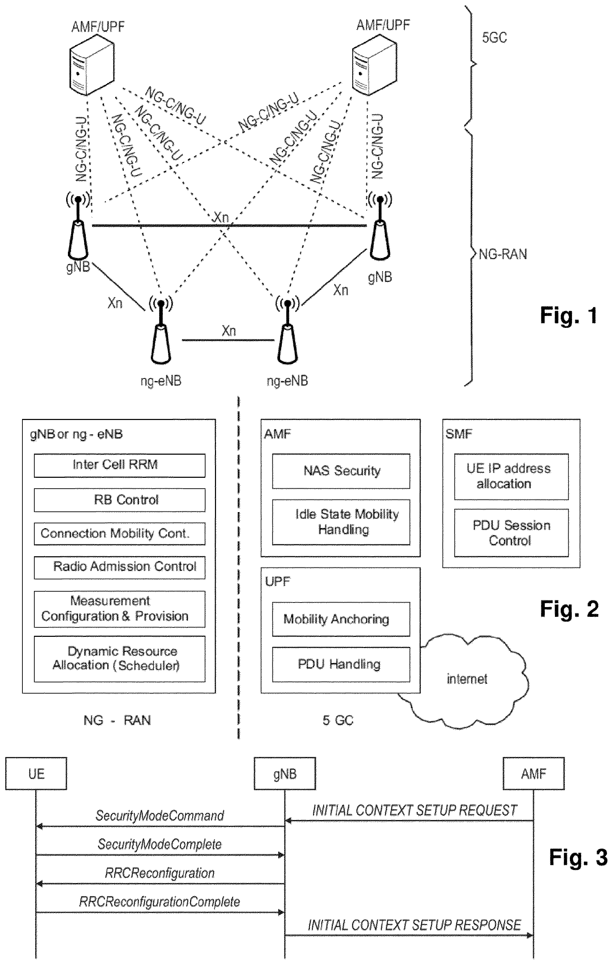

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0 or e.g. v16.2.0, section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types of NR numerology are summarized in 3GPP TS 38.211, v 15.7.0.

### 5G NR functional split between NG-RAN and 5GC

**Fig. 2** illustrates functional split between NG-RAN and NGC or 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or CAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

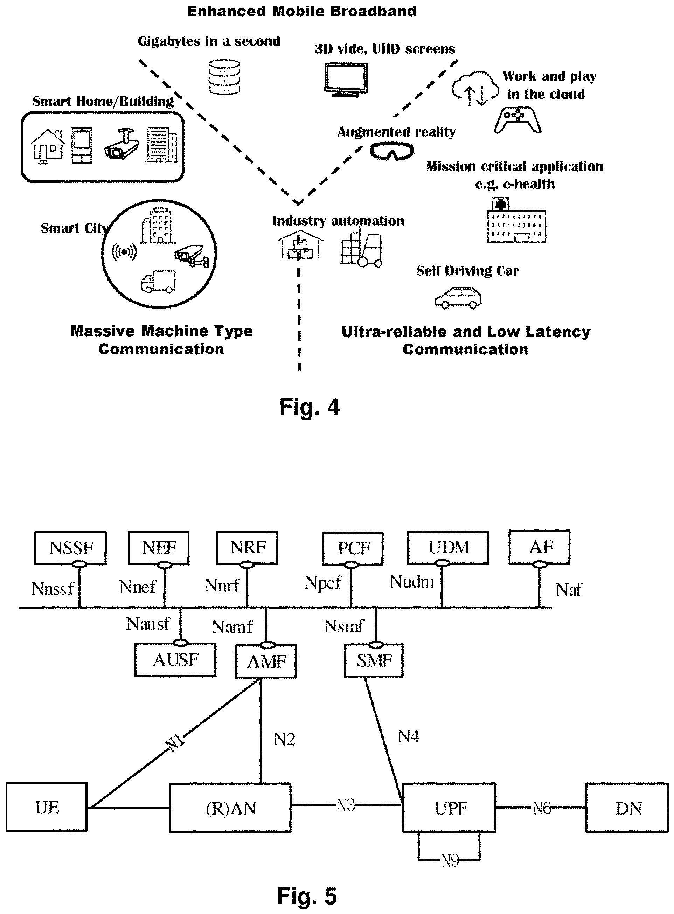

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms (milliseconds) for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a Demodulation Reference Signal (DMRS), a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS). Reference signals may be used at a receiving apparatus for estimating channel characteristics and/or for synchronization. One or more parameters of a reference signal may also be used to transmit data (control or payload) while another one or more parameters of the same reference signal may be used as the reference. For example, a reference signal may be used to compare the received power with the reference power. However, the reference signals may also be used to compare phase and/or frequency or the like.

### Time Intervals

In the present disclosure, time resource units are not limited to one or a combination of slots and symbols, and may be time resource units, such as frames, superframes, subframes, slots, time slot subslots, mini-slots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the described embodiment(s), and may be other numbers of symbols.

### Frequency Bands

The present disclosure may be applied to any of a licensed band and an unlicensed band. It is applicable for any frequency bands, but may be particularly advantageous for higher frequency bands due to the increasing benefits of beamforming. In particular, frequency bands for 5G NR are separated into two different frequency ranges. First, there is Frequency Range 1 (FR1), which includes sub-6 GHz frequency bands, some of which are traditionally used by previous standards, but have been extended to cover potential new spectrum offerings from 410 MHz to 7125 MHz. The other band is Frequency Range 2 (FR2), which includes frequency bands from 24.25 GHz to 52.6 GHz.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term *"physical resource block*" (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Terminology

In the following, UEs, relay nodes, base stations (network or scheduling nodes), and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the disclosure and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A ***terminal*** or ***user terminal*** or ***user device*** or ***mobile station*** or ***mobile node*** is referred to in the LTE and NR as a ***user equipment (UE).*** This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the ***base station*** may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node,*** e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Extended Reality Applications

As exemplarily shown in **Fig. 4****,** extended reality (XR) applications are considered, including augmented reality (AR), virtual reality (VR), mixed reality (MR), and cloud gaming use cases. To support XR applications while reducing the power consumption and increasing the system capacity, a 3GPPP work item for XR enhancements was approved (cf. 3GPP TSG RAN Meeting #98-e, RP-223502, "XR Enhancements for NR").

Objectives of the work item include specifying enhancements related to power saving, including DRX (discontinuous reception) support of XR frame rates corresponding to non-integer periodicities (through at least semi-static mechanisms e.g. RRC signalling).

Objectives of the work item further include the following enhancements related to capacity.
- Multiple CG PUSCH transmission occasions in a period of a single CG PUSCH configuration;
- Dynamic indication of unused CG PUSCH occasion(s) based on UCI by the UE;
- BSR enhancements including at least new BS Table(s);
- Delay reporting of buffered data in uplink;
- Provision of XR traffic assistance information for DL and UL (e.g. periodicity); and
- Discard operation of PDU Sets.

Typically, the XR applications require high data rate in downlink (DL) and uplink (UL) with relatively strict packet delay budget (PDB). In addition, some of XR applications run on devices with a limited source of energy, such as wearable glasses or handheld devices. In this regard, energy efficiency is an important concern. Moreover, XR applications impose a variety of data types, including video streams and pose control traffic.

### Video Stream Traffic Requirements

A video stream may contain video frames with quite large and varying sizes. Regarding packet sizes, for a high quality video stream, the frame size may be around 1M bits after compression for an 8K video. This can lead to having large size packets. Moreover, frame sizes may vary, e.g. due to the structure of the video content or due to some frames being less compressible than other frames. For instance, I-frames (intra-coded pictures), which do not require other frames to decode, may be less compressible than or P-frame/B-frame (predicted or bidirectionally predicted pictures), which require information from the preceding frame (P-frame) or from the preceding and the following frame (B-frames).

Moreover, video stream traffic may typically be characterized as "quasi-periodic", where frames arrive over a time window related to jitter. For instance, the frame packets from a UE/gNB may arrive at the gNB/UE over a time window of [-4, 4] ms or even a larger time window.

Regarding periodicities, an exemplary video stream generates 60, 90, or 120 fps (frames per second), which correspond to a periodicity of 16.667 ms, 11.111 ms, and 8.333 ms, respectively. Accordingly, the periodicity of the time window may be non-integer.

It should be further noted that the delay budget for delivering the XR packets could be tight, for instance, 10 ms for AR/VR or 15 ms for cloud gaming.

### Configured Grant

A UE may be configured for uplink transmission on the PUSCH without having to receive individual resource allocations on the PDCCH for periodic transmission on a specific set of resource blocks. This is referred to as "configured grant" (CG) resource allocation or "grant free" resource allocation. In 3GPP NR, the following two types of CG have been specified within Release 15.

On the one hand, Type 1 configured grants are fully configured by RRC using RRC signaling and do not require PDCCH (layer 1) signaling. A type 1 CG remains valid until further RRC signaling reconfigures the CG.

On the other hand, Type 2 configured grants are configured using a combination of RRC signaling and PDCCH signaling. A subset of the resource allocation is provided by the RRC signaling, whereas the PDCCH may provide the remaining resource allocation information and also acts as an activation trigger, deactivation trigger, or reactivation trigger for the PUSCH transmissions.

### HARQ Process ID for multi-PUSCHs

As mentioned above, multiple CG PUSCH transmissions in the period of a single CG PUSCH configuration are studied. One issue for discussion is the determination of HARQ (Hybrid ARQ) process IDs (HP IDs) to multiple uplink transmissions configured by CG within a period.

Hybrid ARQ (HARQ) refers to a retransmission protocol where the receiving side checks for errors in the received data and requests a re-transmission from the sender if an error in the received data is detected. The HARQ protocol involves sending of acknowledgements (HARQ-ACK) by the data receiving side to the transmitting side.

HP ID numbering is shared among configured and dynamic grants. Therefore, a dynamic grant or a configured grant cannot re-use a HP ID that is used in parallel by another configure or dynamic grant. A UE has a fixed number of HP IDs available for use, depending on the device specifications, e.g. a maximum number of 8 or 16 HP IDs.

For determination of HP IDs associated to PUSCHs in multi-PUSCHs CG transmissions assuming one TB per PUSCH, the following alternatives can be considered (see 3GPP, R1-2301903, "Moderator Summary#4 (Final) -XR Specific Capacity Improvements," RAN1#112).

As a first alternative, the HARQ process ID for the first configured/valid PUSCH in a period could be determined based on the legacy CG procedure when cg-RetransmissionTimer is not configured, and applying "the period duration divided by X" instead of the period duration. The HARQ process ID of the remaining PUSCHs in the period is determined by incrementing the HARQ process ID of the preceding PUSCH in the period. For instance, X may be equal to 1, t the number of configured PUSCHs in a period, or provided by RRC configuration.

As a second alternative, the UE could be supported to decide, as in NR Unlicensed Spectrum (NR-U), the HARQ IDs for the multiple CG PUSCH transmission occasions and indicate the decided HARQ IDs to the gNB if multiple HARQ processes are used for the multiple CG PUSCH transmission occasions in a period of a single CG PUSCH configuration.

As a third alternative, HARQ process ID for the configured PUSCHs in a period is determined based on the legacy CG procedure when cg-RetransmissionTimer is not configured. Therein, one option is to use the same HP ID for all PUSCHs within a period, and another option is to use different HP IDs for all PUSCHs within a period.

In a fourth alternative, the HARQ process ID for the first configured PUSCH in a period is determined based on the legacy CG procedure when cg-RetransmissionTimer is not configured. The HARQ process ID of the remaining PUSCHs in the period is determined by incrementing the HARQ process ID of the preceding PUSCH in the period.

As a fifth alternative, the UE could be supported to decide, as in NR-U, the HARQ IDs for the first CG PUSCH transmission occasions and indicate the decided HARQ IDs to gNB if multiple HARQ processes are used for the multiple CG PUSCH transmission occasions in a period of a single CG PUSCH configuration. The HARQ process ID of the remaining PUSCHs in the period would be determined by incrementing the HARQ process ID of the preceding PUSCH in the period.

As a sixth alternative, other implementations could be considered.

It is noted that the case of one transport block (TB) map to multiple PUSCHs is not considered. A transport block is a packet of data passed between MAC and physical layers.

Moreover, in the above, "cg-RetransmissionTimer" refers to a timer also used in NR-U communication that is re-set when the UE has successfully transmitted a CG PUSCH transmission.

### Further Modifications

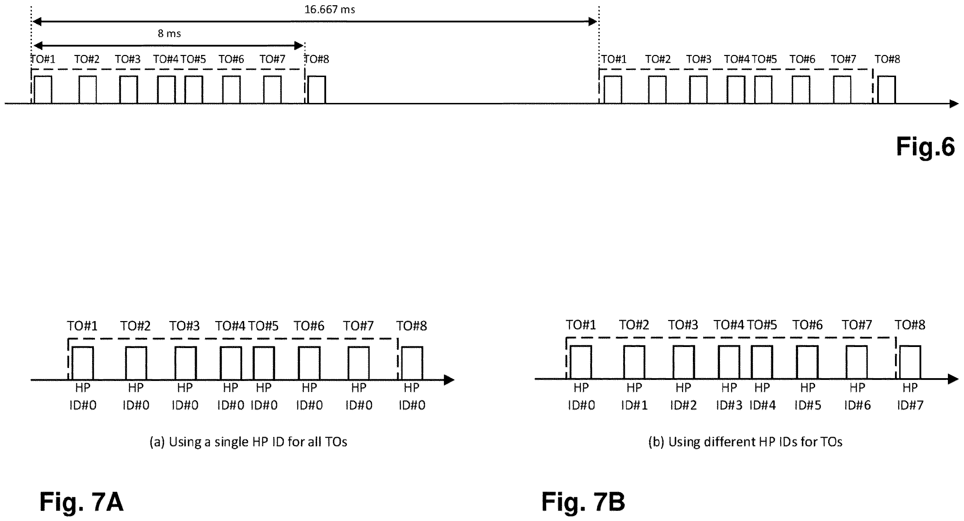

The inventors have considered the possibility of configuring a CG with multi-PUSCHs to deliver video frames on the uplink, e.g. XR video frames. In an example shown in Fig. **6****,** a multi-PUSCHs CG with 8 transmission occasions (TOs) per period is configured to deliver XR video traffic with 60 fps corresponding to a period of 16. 667 ms. Moreover, uneven time delays between consecutive TOs are considered, e.g. a time interval or difference between TO#5 and TO#4 being smaller than a time difference between TO#2 and TO#1. In Fig. 6, an 8 ms jitter window is shown within which a frame arrives. It is noted that the TOs are configured such that when a frame arrives, the next TO is used for the transmission. If a frame arrives at the end of the frame, TO#8, which is outside jitter window, can be used.

A reason for a configuration of multi-PUSCHs CG with uneven time delays is to take into account an estimations or statistical assumptions on the arrival of video frame data for transmission on account of jitter.

Moreover, depending on the amount of data of a video frame, data of one video frame may be transmitted on a single one of the plurality of configured TOs of the CGs in one packet (e.g. TB) or distributed among a plurality of TOs in respective packets (e.g. TBs).

As mentioned above, there are different approaches to assigning HARQ process IDs (HP IDs) to the TOs of a CG. In the one hand, in an example shown in **Fig. 7A****,** a single HP ID is assigned to all TOs of a CG. With such HP ID assignment, the gNB may be able to reschedule only the latest TO for the retransmission. On the other hand, in an example shown in **Fig. 7B****,** different HP IDs are assigned to the plurality of TOs. This approach allows the gNB to reschedule all TOs of a CG in a period for retransmission. However, a large number of HP IDs is required to be dedicated to the CG.

### Embodiments

The inventors have identified the possibility of configuring a TOs of a CG with a minimum time period and releasing the HARQ process (HP) ID for a new transport block (TB) transmission if the configured/associated minimum time period has passed. The minimum time period for a HP ID can be defined, for example, for an individual CG configuration, PUSCH transmission occasion within a CG, or HP.

The present disclosure in particular provides scheduling devices or scheduling apparatuses (such as scheduling nodes), corresponding methods for scheduling devices, communication devices or communication apparatuses (e.g. adapted/configured to perform the function of a communication terminal in a communication system), corresponding methods and (computer) programs (e.g. stored on a memory) for communication devices, communications systems comprising such scheduling devices and communication devices, as well as integrated circuits which, in operation, control a processes of scheduling devices/communication devices to perform the respective methods.

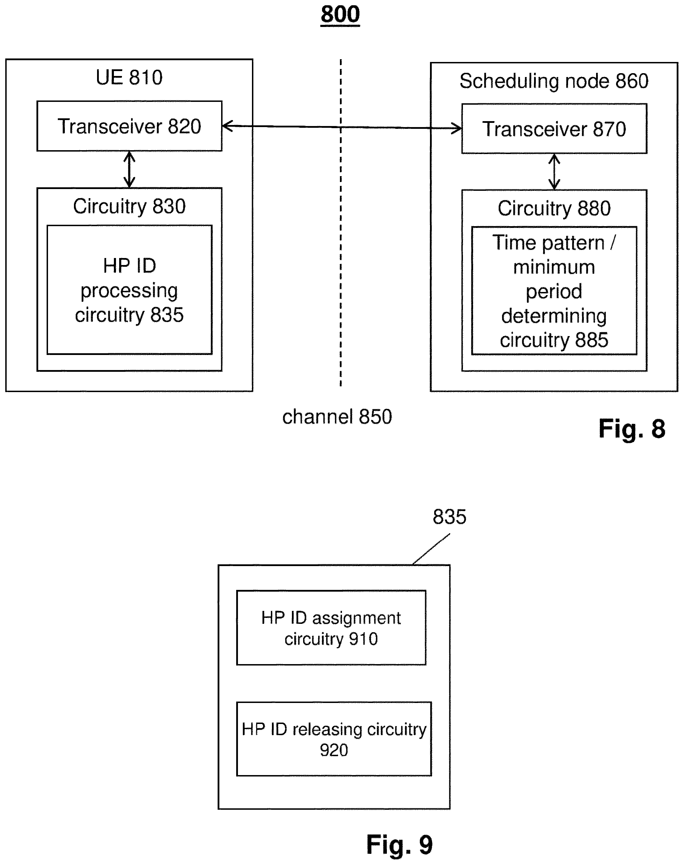

An example of such communication system is illustrated in **Fig. 8****.** The communication system 800 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 8** illustrates a general, simplified and exemplary block diagram of a communication apparatus 810 (here assumed to be a user equipment (UE) or communication terminal) and a scheduling device 860 or scheduling node (here exemplarily assumed to be located in a base station, e.g. in a LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 810 may also be a sensor device, a wearable device, or a connected vehicle, or a controller of an automated machine in an industrial factory.

As illustrated in **Fig. 8****,** the communication device 810 and the scheduling device 860 (eNB/gNB) may communicate with each other over a (wireless) physical channel 850 respectively using their transceivers 820 (communication terminal side) and 870 (base station side). Together, the scheduling device 860 and the communication apparatus 810 form the communication system 800. The communication system 800 may further include other entities such as those shown in Fig. 1 and, e.g. a plurality of UEs connected to the scheduling node or a relay node relaying signals to/from the base station from/to one or more UEs.

### Transceiver & Circuitry

As illustrated in **Fig. 8** (left-hand side), the communication device may comprise a transceiver and circuitry (or processing circuitry), and the scheduling device may comprise a transceiver and a (processing) circuitry.

The term "***transceiver***" refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term "*transceiver*" is used for hardware and software components that allow a communication device to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a communication apparatus 810 or communication device as e.g. illustrated in **Fig. 8** (left-hand side) is provided. The communication device comprises a transceiver 820 and circuitry 830. The transceiver, in operation, receives one or more signals. The one or more signals convey:
- a configured grant for a periodic time pattern of one or more transmission occasions, TOs for an uplink shared channel and
- a configuration of a minimum time period for reusing a hybrid automatic repeat request, (HARQ) process identifier (HP ID) associated with the one or more TOs.

The circuitry 830, in operation, assigns, to a first uplink transmission to be transmitted on a first TO among the one or more TOs, a first HP ID. The transceiver 820, in operation, transmits he first uplink transmission on the first TO using the first HP ID. The circuitry 830, in operation, releases the first HP ID upon expiry of the minimum time period for reusing the HP ID for a second uplink transmission.

The circuitry 830 is exemplarily considered to include HP ID processing circuitry 835, which assigns HP ID(s) to uplink transmissions on TOs and which releases a HP IDs. **Fig. 9** shows an exemplary structure of HP ID processing circuitry 835. As shown, exemplary HP ID processing circuitry 835 includes HP ID assignment circuitry 910 and HP ID releasing circuitry 920. The HP ID assignment circuitry may be responsible for assignment of HP IDs to TOs or uplink transmissions on TOs. The HP ID releasing circuitry 920 may be responsible for determining whether the minimum time period for reusing a HP ID has expired.

For instance, HP ID releasing circuitry 920 (or other parts of the circuitry 830) may keep a timer which is started at the beginning or end of a TO where an uplink transmission is performed, and which is compared with the configured minimum time period received in the one or more signals. At the same time, circuitry 830 may control transceiver 820 to monitor for signals conveying a HARQ-ACK for the first uplink transmission. The release of the first HP ID may be performed under the condition of a successful first transmission as indicated by HARQ-ACK. Alternatively, circuitry 830, 835 or 920 may determine or calculate from the received configuration of a time pattern of TOs whether a time interval between a second uplink transmission on a second TO and a first uplink transmission on a first TO is greater or smaller than the configured minimum time period, possibly in combination with monitoring for HARQ-ACK or NACK between the TO and expiry of the minimum time period for reusing the HP ID.

It is, however, noted that the circuitries 830, 835, 910, and 920 may implement more functionality than the above-mentioned HP ID processing and assignment, as circuitry 830 may, for instance, further control the transceiver 820 to transmit or receive transmissions of data and control signaling. For instance, a circuitry may be configured to determine resources for transmission/reception of data, in particular the resources for relaying transmission and transmissions of control signaling. In particular, the time (e.g. start, end, and/or length) of transmissions may be determined by a circuitry. For instance, the transceiver 820 may receive signaling including an indication indicating resources for transmission(s) (e.g. a scheduling DCI), a circuitry may obtain said indication from the signaling, and the relay may determine the resources based on the obtained indication. Furthermore, circuitry 830 may determine the TOs for the uplink transmissions of the CG PUSCH based on the time pattern received in one or more signals such as control signals.

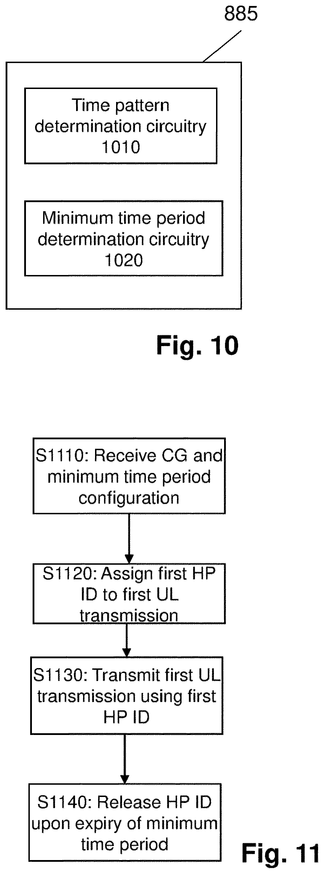

In correspondence with the above-described communication apparatus 810, a communication method to be performed by a communication apparatus is provided. As shown in **Fig. 11****,** the method includes a step S1110 of receiving one or more signals conveying:
- a configured grant for a periodic time pattern of one or more transmission occasions, TOs for an uplink shared channel, and
- a configuration of a minimum time period for reusing a hybrid automatic repeat request, HARQ, process identifier, HP ID associated with the one or more TOs.

The method further includes a step S1120 of assigning, to a first uplink transmission to be transmitted on a first TO among the one or more TOs, a first HP ID, and a step S1130 of transmitting the first uplink transmission on the first TO. Further, the method includes a step S1140 of releasing the first HP ID upon expiry of the minimum time period for reusing the HP ID to allow for the HP ID to be reused for a second uplink transmission.

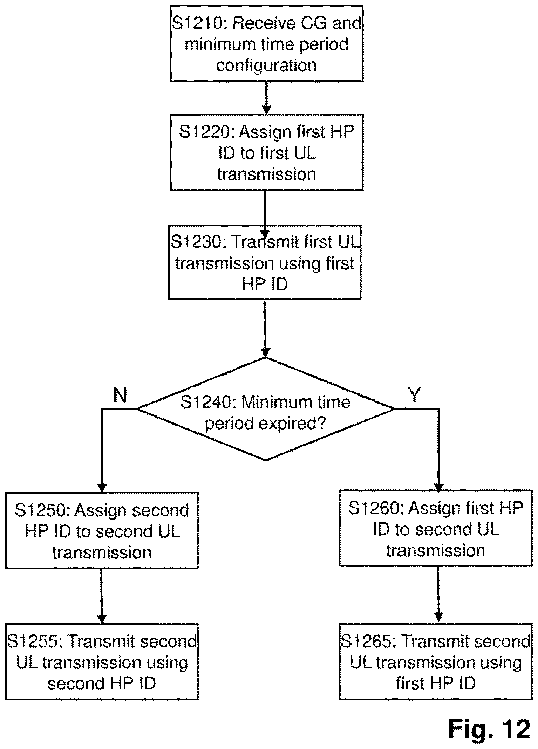

Exemplary method steps for determining whether or not the first HP ID is reused for a second transmission are shown in **Fig. 12****,** where steps S1210 to S1230 correspond to above-described steps S1110 to S1130 of Fig. 11. Furthermore, as shown in **Fig. 12****,** embodiments of the communication method for a communication apparatus 810 may include a step of determining S1240 whether the minimum time period for reusing the HP ID has expired at a timing where a second uplink transmission is to be made. Step1240 may also be implemented by determining whether a time difference between a timing of the second transmission and the first TO is greater than the minimum time period.

If the result of step S1240 is no, the method may include step S1250 of assigning a second HP ID different from the first HP ID to the second uplink transmission, and the second uplink transmission is performed using the second HP ID (step S1255). If the result of step S1240 is yes, the first HP ID is assigned to the second uplink transmission (step S1260), and the second uplink transmission is made using the first HP ID.

The UE may be configured to count the minimum time period from the beginning or end of the respective PUSCH TO.

Also provided is a scheduling node 860 or scheduling device, as shown in Fig. 8 (right-hand side). The scheduling node 860 comprises a transceiver 870 and circuitry 880. The circuitry 880, in operation, determines:
- a periodic time pattern of one or more transmission occasions, TOs, for an uplink shared channel to be transmitted by a communication apparatus 810, and
- a minimum time period for reusing a hybrid automatic repeat request, HARQ, process identifier, HP ID, within the one or more TOs.

The transceiver 870, in operation, transmits, to the communication apparatus 810, one or more signals conveying a configured grant for the periodic time pattern and a configuration of the minimum time period for reusing the HP ID.

If the communication apparatus 810 performs uplink transmissions including a first uplink transmission on a TO among the one or more TOs as well as a second uplink transmission, the transceiver 860, in operation, receives, from the communication apparatus, a first transmission having a first HP ID on a TO among the one or more TOs and a second transmission having:
- the first HP ID if a time difference between a timing of the second transmission and the first TO is smaller than a minimum time period for reusing the HP ID, or
- a second HP ID if the time difference between the timing of the second transmission and the first TO is greater than the minimum time period for reusing the HP ID.

The circuitry 880 (or "gNB circuitry" 880 for short) is exemplarily considered to include time pattern and minimum time period determining circuitry 885. **Fig. 10** shows an exemplary structure of time pattern and minimum time period determining circuitry 885, including time pattern determination circuitry 1010 and minimum time period determination circuitry 1020. Time pattern determination circuitry 1010 may be responsible for determining a time pattern of TOs for a CG, and minimum time period determination 1020 circuitry may be responsible for determining a minimum time period for HP ID reuse after transmission on one or more TOs of the determined time pattern. However, as has also noted above for the circuitry 830 of the communication apparatus (or "UE circuitry" 830 for short), circuitries 880, 885, 1010, and 1020 may implement more functionality than the above-mentioned functionality.

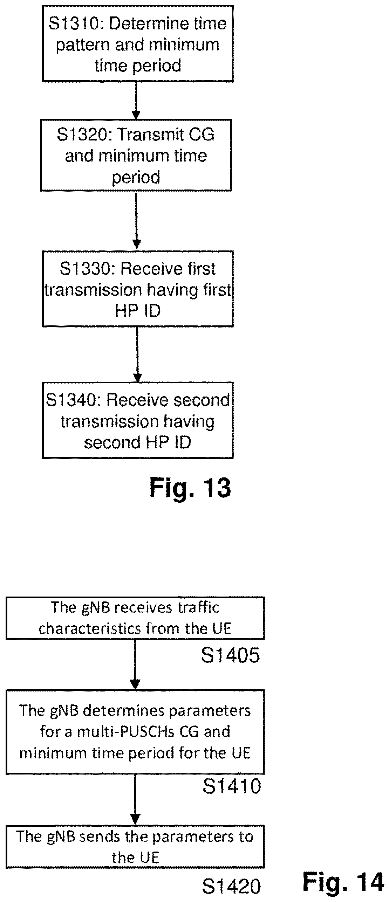

In correspondence with the above-described scheduling node 860, provided is a communication method for a scheduling node. As shown in **Fig. 13****,** the communication method for a scheduling node comprises step S1110 of determining:
- a periodic time pattern of one or more transmission occasions, TOs, for an uplink shared channel to be transmitted by a communication apparatus, and
- a minimum time period for reusing a hybrid automatic repeat request, HARQ, process identifier, HP ID, within the one or more TOs.

The communication method further includes step S1320 of transmitting, to the communication apparatus, one or more signals conveying a configured grant for the periodic time pattern and a configuration of the minimum time period for reusing the HP ID.

If the communication apparatus 810 performs uplink transmissions in accordance with steps S1130/S1230 and S1255 or S1265 of **Figures 11** **and** **12** including a first uplink transmission on a TO among the one or more TOs as well as a second uplink transmission, the method includes step S1330 of receiving, from the communication apparatus 810, the first transmission having a first HP ID on a TO among the one or more TOs, and a step S1340 of receiving a second uplink transmission from the communication apparatus 810. In step S1340, the second uplink transmission has:
- the first HP ID if a time difference between a timing of the second transmission and the first TO is smaller than a minimum time period for reusing the HP ID, or
- a second HP ID if the time difference between the timing of the second transmission and the first TO is greater than the minimum time period for reusing the HP ID.

As mentioned above, in accordance with embodiments of the present disclosure, the scheduling node 860 determines a configuration of a periodic time pattern of one or more TOs for CG uplink transmissions. The time pattern is a time pattern for one or more TOs of a CG, which may be a CG for a single PUSCH per period or for a multi-PUSCHs CG.

The UE 810 configured with a minimum time period to reuse the HP ID for a data transmission. When the UE transmit data using a certain HP ID, it can reuse the same HP ID after the minimum time period has passed.

In the present disclosure, the "first uplink transmission" and other uplink transmissions, e.g. on TOs of a CG, are uplink transmissions following a HARQ protocol, where a HP ID is assigned to each uplink transmission. If the gNB circuitry 880 fails to decode the first transmission and/or the second transmission successfully, the gNB may, using transceiver 870, transmit a downlink control signal triggering a retransmission of the first transmission using the first HP ID.

The minimum time period can be configured such that the gNB 860 has enough time to trigger the retransmission of TOs.

With the above-described apparatuses and methods and their embodiments to be described further, the present disclosure allows for limiting a number of HP IDs dedicated to a CG while giving the gNB 860 enough time to trigger the retransmission for uplink transmissions of TOs (in case of unsuccessful transmission).

The minimum time period can be determined by the gNB 860 considering the PUSCH TOs, CG periodicity, traffic requirements, and other parameters. For instance, the UE 810 transmits, using transceiver 820, an uplink control signal such as a UCI (uplink control information) indicating one or more of a traffic requirement or traffic characteristic, characteristic for data to be transmitted, CG periodicity, data periodicity such as frames per second etc., or other information on the uplink shared channel.

The gNB 860 receives, using gNB transceiver 870, the uplink control signal indicating one or more of the aforementioned traffic requirement or characteristic, CG periodicity, data periodicity such as frames per second for data to be transmitted on the uplink shared channel etc., and determines, using gNB circuitry 880, the minimum time period for reusing the HP ID based on the indicated traffic requirement.

Exemplary behaviors of the gNB are illustrated in **Fig. 14****.** In step S1405, the gNB 860 receives traffic characteristics and/or the other information mentioned above from the UE. In step S1410, which may be performed as part or as an implementation of step S1310, the gNB 860 determines parameters for a multi-PUSCHs CG and minimum time period for the UE, which the gNB then sends to the UE in step S1420 corresponding to step S1320. Furthermore, if the UE 810 sends uplink transmissions, the gNB performs steps S1330 and S1340 as shown in **Fig. 13****.**

Alternatively, the UE can propose the minimum time period to the gNB 860 to be utilized. For instance, the UE 810 determines, using circuitry 830, based on one or more of a traffic requirement or traffic characteristic, characteristic for data to be transmitted, CG periodicity, data periodicity such as frames per second etc, a proposed minimum time period or candidate minimum time period and transmits an uplink control signal (e.g. DCI) indicating the candidate minimum time period to a scheduling node to the scheduling node / gNB 860 for determining the minimum time period for reusing the HP ID based on the proposed minimum time period. The scheduling node 860, using circuitry 880, determines the minimum time period for reusing a HP ID based on the proposed minimum time period received from the UE 810.

In the present disclosure, the above-mentioned "first transmission" is a transmission made on a first TO of the one or more TOs within a period of the CG. The "second transmission" may in general be any dynamic grant or CG uplink transmission from the same or a different configured grant. Thus, the expressions "first transmission" and "second transmission" are not limited to uplink transmissions on the first and second consecutive TOs of a multi-PUSCHs CG in time order, such as TO#1 and TO#2 shown e.g. in **Fig. 6****.**

In a case where a time pattern of transmission occasions includes at least two TOs, there may be uneven time delays or time differences between consecutive TOs. For instance, the periodic time pattern may define the one or more TOs to be non-uniformly or unevenly distributed in time. In other words, a time difference between a pair of directly consecutive TOs (e.g. TO#5 and TO#4) shown in **Fig. 6** may be smaller than another pair of directly consecutive TOs such as TO#2 and TO#1. However, the present disclosure is not limited to uneven distributions of TOs within a CG time pattern of TOs as time intervals within a CG time pattern may also be evenly distributed. For instance, time intervals within a time pattern of one CG may be evenly distributed and larger than the minimum time interval for reusing the HP ID, whereas a time interval between a TO of said time pattern and a TO from a another (configured or dynamic) grant is smaller than the minimum time interval.

As mentioned, a possible use case of CG with multiple PUSCHs is uplink video e.g. in XR applications. The data to be transmitted on the one or more TOs may include a video frame of a video stream. The UE, in operation, allocates the data to be transmitted to the one or more TOs in accordance with a jitter with which the video frame becomes available to be transmitted. For example, a video frame may be transmitted on a single TO or divided and packetized to be transmitted in respective packets on a plurality of TOs in a period of the time pattern.

Furthermore, the gNB 860, using circuitry 880, may determine a time period of the periodic time pattern of a CG in correspondence with a frame rate of the video stream.

Configuration of a minimum time period in accordance with the embodiments of the present disclosure may facilitate providing a suitable amount of time for triggering retransmissions in particular with uneven time intervals between uplink transmissions of one or more CGs or other uplink transmissions.

When assigning HP IDs to uplink transmissions, the UE may report the utilized HP ID as a part of CG-UCI in a PUSCH TO. For instance, the UE transceiver 820, in operation, transmits, within the each TO, a first uplink control signal such as CG-UCI indicating the assigned HP ID.

In the following, we consider examples of HP ID assignment to uplink transmissions of TOs of one or more CGs.

### Minimum time period for CG configuration

In some embodiments, the UE 810 is configured with a minimum time period to reuse the HP ID for a transmission. When the UE 810 transmits data using a certain HP ID, it can reuse the same HP ID after the minimum time period has passed.

For instance, the second uplink transmission is to be transmitted on a second TO among the one or more TOs directly consecutive to the first TO in the order of the one or more TOs. The UE circuitry 830, in operation assigns, to the second uplink transmission:
- a second HP ID different from the first HP ID if a time difference between the second TO and the first TO is greater than the minimum time period for reusing the HP ID, or
- the first HP ID if the time difference between the second TO and the first TO is smaller than a minimum time period for reusing the HP ID.

The UE transceiver 820, in operation, transmits the second transmission on the second TO using the first or the second HP ID in accordance with the assignment.

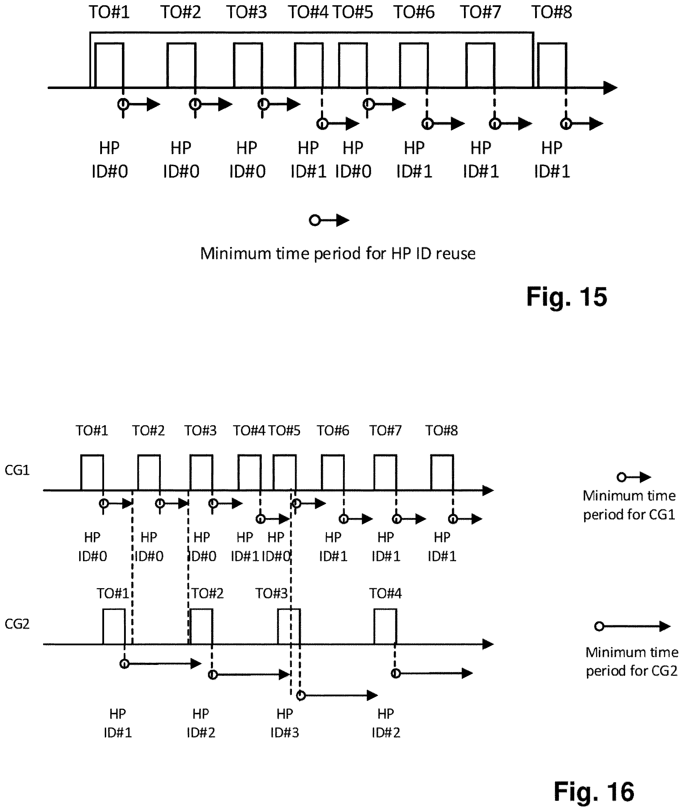

In an example shown in **Fig. 15****,** a multi-PUSCHs CG with 8 PUSCH TOs is configured. A CG is assigned with a minimum time period for HP ID reuse. A given HP ID can be reused for a PUSCH TO if the minimum time period has passed. In the example shown, HP ID#0 used on TO#1 is reused on TOs #2 and #3, and HP ID#1 used on TO#6 is reused on TOs #7 and #8.

In the example shown, the "second transmission" refers to a transmission from the same CG configuration as the first transmission. E.g. when regarding TO#1 as the first transmission, the second transmission may refer to TO#2, or when regarding TO#4 as a first transmission, the second transmission may refer to TO#5.

However, as noted above, the second UL transmission in general refers to another transmission different from the first UL transmission, which may be scheduled by the same or another configured grant but is not limited thereto as it may also be scheduled by DCI.

### Different minimum time periods for CG configurations

In some embodiments, different minimum time periods are defined for CG configurations or traffic types in order to reuse HP IDs.

For instance, the UE 810 receives in the one or more signals from the scheduling node, configuration of a first configured grant for a first periodic time pattern of one or more TOs and a first minimum time period for reusing the HP ID after each of the one or more TOs of the first periodic time pattern, and of a second configured grant for a second time pattern of one or more TOs and a configuration of a second minimum time period for reusing the HP ID after each of the one or more TOs of the second periodic time pattern, wherein the second minimum time period is different from the first minimum time period in duration. For instance, the second time period is shorter than the first time period. Alternatively, the second time period may be longer than the first time period.

In accordance with the present embodiments, the UE 810 can be configured with different CGs to carry various traffic types with different communication requirements. For example, a CG carrying more sensitive data can be assigned with a larger minimum time period for reusing the HP ID, to provide the gNB 860 with more time budget to trigger the data retransmission.

In an example shown in **Fig. 16****,** the UE 810 is configured with two multi-PUSCHs CGs: one CG with 8 PUSCH TOs and another one with 4 PUSCH TOs. The first CG is configured with a short minimum time period while the second CG is configured with a larger minimum time period for reusing the HP IDs.

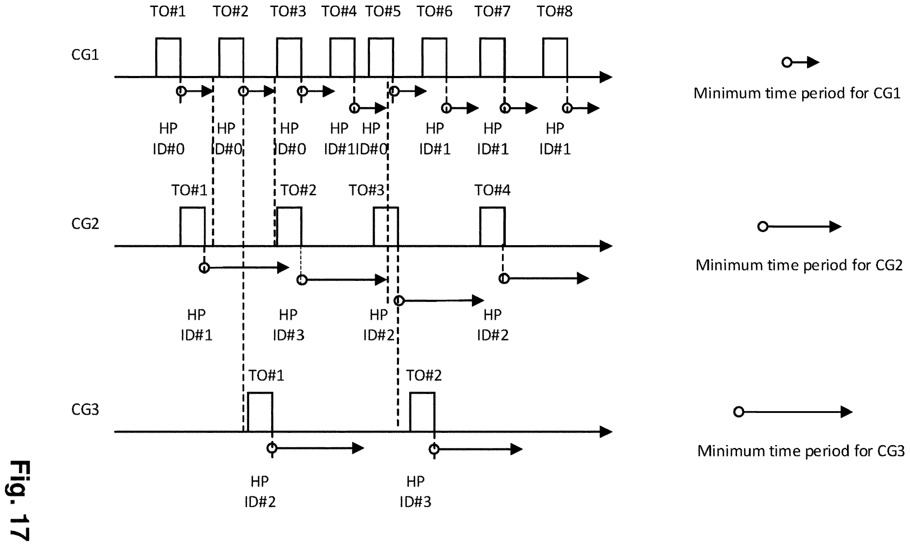

In another example shown in **Fig. 17****,** the UE 810 with three multi-PUSCHs CGs: a first one CG with 8 PUSCH TOs, a second one with 4 PUSCH TOs, and a third one with 2 PUSCH TOs. Different time periods are assigned for CGs to reuse the HP IDs.

The approach in accordance with the present embodiments provides a flexible use of HP IDs among the CG configurations. Time flexibility is provided for triggering the data retransmission according to e.g. the traffic type.

### Lowest/ Highest HP ID

To achieve a more even HP ID utilization, the CG can be configured to utilize the "least" (or "lowest" HP ID)/" most" (or "highest" HP ID) HP ID among the available HP IDs for the transmission.

For instance, if the UE has a given number (denoted N) of HP IDs available for different transmissions each using a HARQ protocol, e.g. N = 16, the "lowest" HP IDs are a one or more HP IDs formed using consecutive integers starting from 0 (e.g. HP#0, HP#1, HP#2,...), and the "highest" HP IDs are one or more HP IDs formed using consecutive integers including N-1 (or N, depending on whether HP IDs are counted starting from 0 or 1), which may be counted in decreasing order (e.g. HP#15, HP#14, ...).

For instance, the UE circuitry 830, in operation, assigns, among a plurality of HP IDs available to the communication apparatus, first one or more HP IDs to a first plurality of uplink transmissions to be transmitted on the one or more TOs of the first periodic time pattern, and assigns second one or more HP IDs to a second plurality of uplink transmissions to be transmitted on the one or more TOs of the second periodic time pattern. Therein, the first one or more HP IDs may be selected from lowest consecutive integers available for HP ID numbering, and the second one or more HP IDs may be selected from highest consecutive integers available for HP ID numbering.

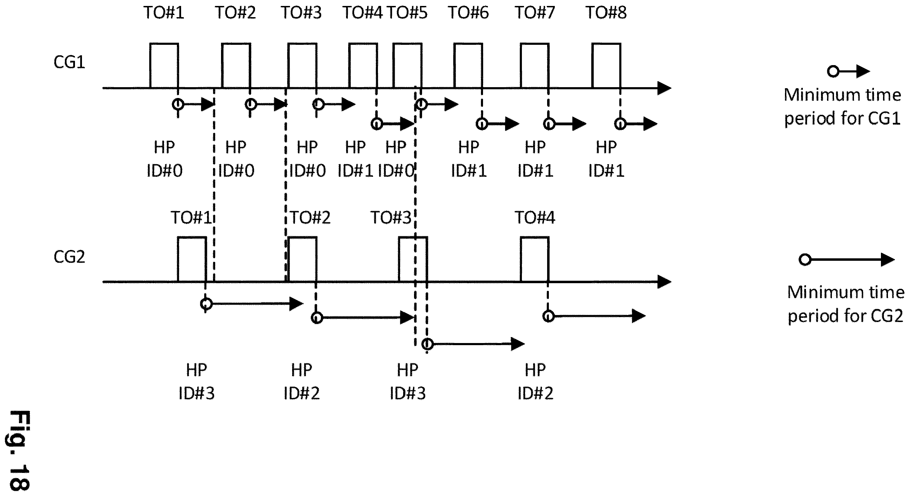

An example is shown in **Fig. 18****.** Like in the example of Fig. 16, the UE is configured with two multi-PUSCHs CGs, one with 8 PUSCH TOs per period and the other one with 4 PUSCH TOSs per period. Both CGs are assigned with 4 HP IDs: HP ID#0 to HP ID#3 (it is assumed here that the number N of available HP IDs in this example is 4). The UE is configured to use the lowest available HP ID for CG1 and the highest HP ID for CG2. As is shown here, "higher" HP IDs are used in CG2 having configured a longer minimum time period, and "lower" HP IDs are selected for CG 1 having configured a shorter minimum time interval. Accordingly, however, the present embodiment is not limited to CGs with different minimum time periods, and may also be applied to CGs having the same minimum time period configured.

With such a HP ID assignment in accordance with the present embodiments, it is possible for a UE to use the HP IDs available for the UE more uniformly. This may facilitate efficient memory utilization and feasible processing of HP IDs, collision avoidance between CGs in the selection of HP IDs, as well as enabling the UE to use all HP IDs frequently, e.g. with "low" HP IDs and "High HP IDs" having similar frequencies.

It is noted that although **Fig. 18** shows an example where two CG configurations CG1 and CG2 are configured with different minimum time periods, the HP ID assignment in accordance with the present embodiments is not limited thereto. It is likewise applicable to a plurality of CG configurations having the same configured minimum time period or even CGs where the minimum time period is adapted or adjusted between TOs within a period of the time pattern yet to be described.

### Adaptive adjustment of the minimum time period

In some embodiments, the minimum time period for reusing the HP ID can be adjusted adaptively or "dynamically". For instance, different minimum time periods may be configured for different TOs among the plurality of TOs in a period of a CG time pattern. Therein, the minimum time period for HP ID reuse may be adapted or adjusted, e.g., based on the TB size, number of code blocks (CBs), MCS, or amount of allocated RBs.

In some embodiments, the UE circuitry 830 and/or the gNB circuitry 880, in operation, determines, for the first and for the second uplink transmission, the minimum time period for reusing the HP ID after the transmission, respectively, based on at least one of a size of data or resources to be transmitted or a modulation and coding scheme to be used.

For instance, indications of the different minimum time period are included in the one or more signals conveying the configuration of the time pattern, and the UE 810 determines the respective time periods for the TOs based on the configuration from the received signal(s).

Alternatively, the UE may be configured with rules (e.g. look-up tables) for adjusting the signaled time dependent on certain characteristics, e.g. adding or subtracting some time in accordance with an MCS used.

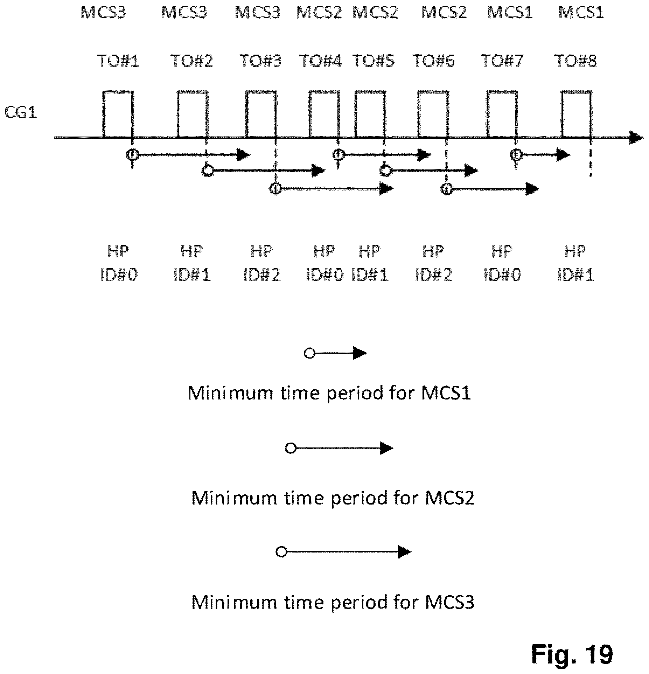

In example is shown in **Fig. 19****,** where a multi-PUSCHs CG is configured with 8 PUSCH TOs and different MCSs. different minimum time periods are configured for HP IDs according to the assigned MCS. A shorter period is set for a PUSCH with lower MCS, since there may be a higher chance for the successful transmission and lower chance for requiring the retransmission.

An adaptive determination or configuration of HP IDs in accordance with present embodiments facilitates providing flexibility for reusing the HP IDs, according to the transmission characteristics.

### Notes

In the present disclosure, behavior of a communication apparatus 810 (e.g. UE) and a scheduling node 860 (e.g. gNB) have been described in cases where a time difference between a second TO and a first TO is greater than or smaller than a minimum time period for reusing a HP ID. If the time difference between the TOs is equal to the configured minimum time period, it can be left for implementation whether the UE is allowed to reuse the HP ID or not. The behavior for the case of the time difference being equal to the configured time period is not essential for the present disclosure. Depending on the implementation, the minimum time period may also be considered a time threshold for reusing the HP ID.

The one or more signals conveying a periodic time pattern for a CG (or a plurality of periodic time patterns for CGs) may be semi-static signaling, e.g. one or more RRC signals, and may further dynamic signaling such as a DCI, e.g. in accordance with or similar to the description of type-1 CG and type-2 CG provided above. For instance, the time pattern may be configured via RRC, and the minimum time period may be dynamically configured or reconfigured via DCI.

It is further noted that the TOs in CG PUSCH are time resources such as slots or symbols within a slot. As can be seen in the examples provided, the TOs of a multi-PUSCHs CG need not be neighboring, and there may be delays or time differences of varying sizes between the TOs as the TOs may be unevenly distributed in time.

Furthermore, it may occur that a configured TO of a CG pattern collides with a time resource (slot or symbol(s)) configured as flexible or downlink. In such a case, the UE may determine to move the TO e.g. to a next available time resource configured e.g. for uplink. In the present disclosure, the "one or more TOs" also include TOs where an uplink transmission is made which have been removed from the resources configured by the gNB.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. For example, a relay node, a network node, and a scheduling device may be considered (each) as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Aspects

In accordance with a first aspect, provided is a communication apparatus comprising a transceiver, which, in operation, receives one or more signals conveying: a configured grant for a periodic time pattern of one or more transmission occasions, TOs for an uplink shared channel, and a configuration of a minimum time period for reusing a hybrid automatic repeat request, HARQ, process identifier, HP ID associated with the one or more TOs; and circuitry, which, in operation, assigns, to a first uplink transmission to be transmitted on a first TO among the one or more TOs, a first HP ID, wherein the transceiver, in operation, transmits the first uplink transmission on the first TO using the first HP ID, and wherein the circuitry, in operation, releases the first HP ID upon expiry of the minimum time period for reusing the HP ID to be reused for a second uplink transmission.

In accordance with a second aspect, which may be provided in combination with the first aspect, the second uplink transmission is to be transmitted on a second TO among the one or more TOs directly consecutive to the first TO in the order of the one or more TOs, and the circuitry, in operation, assigns, to the second uplink transmission: a second HP ID different from the first HP ID if a time difference between the second TO and the first TO is greater than the minimum time period for reusing the HP ID, or the first HP ID if the time difference between the second TO and the first TO is smaller than a minimum time period for reusing the HP ID, wherein the transceiver, in operation, transmits the second transmission on the second TO using the first or the second HP ID in accordance with the assignment.

According to a third aspect, which may be provided combination with the first or second aspect, the transceiver, in operation, transmits, within the first TO, a first uplink control signal indicating the first HP ID, and transmits, within the second TO, a second uplink control signal indicating the first or the second HP ID in accordance with the assignment.

According to a fourth aspect, which may be provided in combination with any one of the first to third aspects, said configured grant is a first configured grant for a first periodic time pattern of one or more TOs, said minimum time period is a first minimum time period for reusing the HP ID after each of the one or more TOs of the first periodic time pattern, and the one or more signals convey a second configured grant for a second time pattern of one or more TOs and a configuration of a second minimum time period for reusing the HP ID after each of the one or more TOs of the second periodic time pattern, the second minimum period being different in duration from the first minimum time period.

According to a fifth aspect, which may be provided in combination with any one of the first to fourth aspects, the circuitry, in operation, assigns, among a plurality of HP IDs available to the communication apparatus, first one or more HP IDs to a first plurality of uplink transmissions to be transmitted on the one or more TOs of the first periodic time pattern and second one or more HP IDs to a second plurality of uplink transmissions to be transmitted on the one or more TOs of the second periodic time pattern, wherein the first one or more HP IDs are selected from lowest consecutive integers available for HP ID numbering, and the second one or more HP IDs are selected from highest consecutive integers available for HP ID numbering.

According to a sixth aspect, which may be provided in combination with any one of the first to fifth aspects, the circuitry, in operation, determines the minimum time period for reusing the HP ID after each of the first uplink transmission and the second uplink transmission, based on at least one of a size of data or resources to be transmitted or a modulation and coding scheme to be used.

According to a seventh aspect, which may be provided in combination with any one of the first to sixth aspects, the transceiver, in operation, transmits an uplink control signal indicating a traffic requirement or characteristic for data to be transmitted on the uplink shared channel to a scheduling node for determining the minimum time period for reusing the HP ID based on the traffic requirement.

According to an eighth aspect, which may be provided in combination with any one of the first to sixth aspects, the transceiver, in operation, transmits an uplink control signal indicating a traffic requirement or characteristic for data to be transmitted on the uplink shared channel to a scheduling node for determining the minimum time period for reusing the HP ID based on the traffic requirement.

According to a ninth aspect, which may be provided in combination with any one of the first to eighth aspects, the periodic time pattern defines the one or more TOs to be non-uniformly or uniformly distributed in time.

According to a tenth aspect, which may be provided in combination with any one of the first to ninth aspects, data to be transmitted on the one or more TOs includes a video frame of a video stream, and the circuitry, in operation, allocates the data to be transmitted to the one or more TOs in accordance with a jitter with which the video frame becomes available to be transmitted.

According to an eleventh aspect, provided is a scheduling node comprising circuitry, which, in operation, determines: a periodic time pattern of one or more transmission occasions, TOs, for an uplink shared channel to be transmitted by a communication apparatus, and a minimum time period for reusing a hybrid automatic repeat request, HARQ, process identifier, HP ID, within the one or more TOs; and a transceiver, which, in operation, transmits, to the communication apparatus, one or more signals conveying a configured grant for the periodic time pattern and a configuration of the minimum time period for reusing the HP ID, and receives, from the communication apparatus, a first transmission having a first HP ID on a TO among the one or more TOs and a second transmission having: the first HP ID if a time difference between a timing of the second transmission and the first TO is smaller than a minimum time period for reusing the HP ID, or a second HP ID if the time difference between the timing of the second transmission and the first TO is greater than the minimum time period for reusing the HP ID.

According to twelfth aspect, which may be provided in combination with the eleventh aspect, the transceiver, in operation, receives, from the communication apparatus, an uplink control signal indicating a traffic requirement or characteristic for data to be transmitted on the uplink shared channel, and the circuitry, in operation, determines the minimum time period for reusing the HP ID based on the indicated traffic requirement.

According to a thirteenth aspect, which may be provided in combination with the eleventh or twelfth aspect, if the circuitry fails to decode the first transmission successfully, the transceiver, in operation, transmits a downlink control signal triggering a retransmission of the first transmission using the first HP ID.

According to a fourteenth aspect, which may be provided in combination with any one of the eleventh to thirteenth aspects, data to be transmitted on the one or more TOs includes a video frame of a video stream, and the circuitry, in operation, determines a time period of the periodic time pattern in correspondence with a frame rate of the video stream.

According to a fifteenth aspect, provided is a communication method to be performed by a communication apparatus, comprising the steps of: receiving one or more signals conveying: a configured grant for a periodic time pattern of one or more transmission occasions, TOs for an uplink shared channel, and a configuration of a minimum time period for reusing a hybrid automatic repeat request, HARQ, process identifier, HP ID associated with the one or more TOs; assigning, to a first uplink transmission to be transmitted on a first TO among the one or more TOs, a first HP ID; transmitting the first uplink transmission on the first TO using the first HP ID; and releasing the first HP ID upon expiry of the minimum time period for reusing the HP ID to be reused for a second uplink transmission.

In accordance with a sixteenth aspect, provided is a communication method to be performed by a scheduling node, comprising the steps of: determining a periodic time pattern of one or more transmission occasions, TOs, for an uplink shared channel to be transmitted by a communication apparatus, and a minimum time period for reusing a hybrid automatic repeat request, HARQ, process identifier, HP ID, within the one or more TOs; transmitting, to the communication apparatus, one or more signals conveying a configured grant for the periodic time pattern and a configuration of the minimum time period for reusing the HP ID; and receiving, from the communication apparatus, a first transmission having a first HP ID on a TO among the one or more TOs and a second transmission having: the first HP ID if a time difference between a timing of the second transmission and the first TO is smaller than a minimum time period for reusing the HP ID, or a second HP ID if the time difference between the timing of the second transmission and the first TO is greater than the minimum time period for reusing the HP ID.

According to a seventeenth aspect, provided is an integrated circuit which, in operation, causes a communication apparatus to carry out the steps of the communication method according to the fifteenth aspect.

According to an eighteenth aspect, provided is an integrated circuit which, in operation, causes a scheduling node to carry out the steps of the communication method according to the sixteenth aspect.

According to a nineteenth aspect, provided is a program stored on a (non-transitory) storage medium and including code instructions, which, when executed on one or more processors of a communication apparatus, cause the one or more processors to execute the steps the fifteenth aspect.

According to a twentieth aspect, provided is a program stored on a (non-transitory) storage medium and including code instructions, which, when executed on one or more processors of a scheduling, cause the one or more processors to execute the steps the sixteenth aspect.

## Claims

1. A communication apparatus, comprising:
a transceiver, which, in operation, receives one or more signals conveying:
a configured grant for a periodic time pattern of one or more transmission occasions, TOs for an uplink shared channel, and
a configuration of a minimum time period for reusing a hybrid automatic repeat request, HARQ, process identifier, HP ID associated with the one or more TOs; and
circuitry, which, in operation, assigns, to a first uplink transmission to be transmitted on a first TO among the one or more TOs, a first HP ID,
wherein the transceiver, in operation, transmits the first uplink transmission on the first TO using the first HP ID, and
wherein the circuitry, in operation, releases the first HP ID upon expiry of the minimum time period for reusing the HP ID to be reused for a second uplink transmission.

2. The communication apparatus according to claim 1, wherein the second uplink transmission is to be transmitted on a second TO among the one or more TOs directly consecutive to the first TO in the order of the one or more TOs, and the circuitry, in operation, assigns, to the second uplink transmission:
a second HP ID different from the first HP ID if a time difference between the second TO and the first TO is greater than the minimum time period for reusing the HP ID, or
the first HP ID if the time difference between the second TO and the first TO is smaller than a minimum time period for reusing the HP ID,
wherein the transceiver, in operation, transmits the second transmission on the second TO using the first or the second HP ID in accordance with the assignment.

3. The communication apparatus according to claim 1 or 2, wherein the transceiver, in operation, transmits, within the first TO, a first uplink control signal indicating the first HP ID, and transmits, within the second TO, a second uplink control signal indicating the first or the second HP ID in accordance with the assignment.

4. The communication apparatus according to any one of claims 1 to 3, wherein said configured grant is a first configured grant for a first periodic time pattern of one or more TOs, said minimum time period is a first minimum time period for reusing the HP ID after each of the one or more TOs of the first periodic time pattern, and
the one or more signals convey a second configured grant for a second time pattern of one or more TOs and a configuration of a second minimum time period for reusing the HP ID after each of the one or more TOs of the second periodic time pattern, the second minimum period being different in duration from the first minimum time period.

5. The communication apparatus according to claim 4, wherein the circuitry, in operation, assigns, among a plurality of HP IDs available to the communication apparatus, first one or more HP IDs to a first plurality of uplink transmissions to be transmitted on the one or more TOs of the first periodic time pattern and second one or more HP IDs to a second plurality of uplink transmissions to be transmitted on the one or more TOs of the second periodic time pattern, wherein the first one or more HP IDs are selected from lowest consecutive integers available for HP ID numbering, and the second one or more HP IDs are selected from highest consecutive integers available for HP ID numbering.

6. The communication apparatus according to any one of claims 1 to 5, wherein the circuitry, in operation, determines the minimum time period for reusing the HP ID after each of the first uplink transmission and the second uplink transmission, based on at least one of a size of data or resources to be transmitted or a modulation and coding scheme to be used.

7. The communication apparatus according to any one of claims 1 to 6, wherein the circuitry, in operation, determines, based on a traffic requirement for data to be transmitted on the uplink shared channel, a proposed minimum time period, and
the transceiver, in operation, transmits an uplink control signal indicating the candidate minimum time period to a scheduling node for determining the minimum time period for reusing the HP ID based on the proposed minimum time period.

8. The communication apparatus according to any one of claims 1 to 6, wherein the transceiver, in operation, transmits an uplink control signal indicating a traffic requirement or characteristic for data to be transmitted on the uplink shared channel to a scheduling node for determining the minimum time period for reusing the HP ID based on the traffic requirement.

9. The communication apparatus according to any one of claims 1 to 8, wherein the periodic time pattern defines the one or more TOs to be non-uniformly or uniformly distributed in time.

10. The communication apparatus according to any one of claims 1 to 9, wherein data to be transmitted on the one or more TOs includes a video frame of a video stream, and the circuitry, in operation, allocates the data to be transmitted to the one or more TOs in accordance with a jitter with which the video frame becomes available to be transmitted.

11. A scheduling node, comprising:
circuitry, which, in operation, determines:
a periodic time pattern of one or more transmission occasions, TOs, for an uplink shared channel to be transmitted by a communication apparatus, and
a minimum time period for reusing a hybrid automatic repeat request, HARQ, process identifier, HP ID, within the one or more TOs; and
a transceiver, which, in operation,
transmits, to the communication apparatus, one or more signals conveying a configured grant for the periodic time pattern and a configuration of the minimum time period for reusing the HP ID, and
receives, from the communication apparatus, a first transmission having a first HP ID on a TO among the one or more TOs and a second transmission having:
the first HP ID if a time difference between a timing of the second transmission and the first TO is smaller than a minimum time period for reusing the HP ID, or
a second HP ID if the time difference between the timing of the second transmission and the first TO is greater than the minimum time period for reusing the HP ID.

12. The scheduling node according to claim 11, wherein the transceiver, in operation, receives, from the communication apparatus, an uplink control signal indicating a traffic requirement or characteristic for data to be transmitted on the uplink shared channel, and
the circuitry, in operation, determines the minimum time period for reusing the HP ID based on the indicated traffic requirement.

13. The scheduling node according to claim 11 or 12, wherein, if the circuitry fails to decode the first transmission successfully, the transceiver, in operation, transmits a downlink control signal triggering a retransmission of the first transmission using the first HP ID.

14. The scheduling node according to any one of claims 11 to 13, wherein data to be transmitted on the one or more TOs includes a video frame of a video stream, and the circuitry, in operation, determines a time period of the periodic time pattern in correspondence with a frame rate of the video stream.

15. A communication method to be performed by a communication apparatus, comprising the steps of:
receiving one or more signals conveying:
a configured grant for a periodic time pattern of one or more transmission occasions, TOs for an uplink shared channel, and
a configuration of a minimum time period for reusing a hybrid automatic repeat request, HARQ, process identifier, HP ID associated with the one or more TOs;
assigning, to a first uplink transmission to be transmitted on a first TO among the one or more TOs, a first HP ID;
transmitting the first uplink transmission on the first TO using the first HP ID; and
releasing the first HP ID upon expiry of the minimum time period for reusing the HP ID to be reused for a second uplink transmission.

16. A communication method to be performed by a scheduling node, comprising the steps of:
determining:
a periodic time pattern of one or more transmission occasions, TOs, for an uplink shared channel to be transmitted by a communication apparatus, and
a minimum time period for reusing a hybrid automatic repeat request, HARQ, process identifier, HP ID, within the one or more TOs;
transmitting, to the communication apparatus, one or more signals conveying a configured grant for the periodic time pattern and a configuration of the minimum time period for reusing the HP ID; and
receiving, from the communication apparatus, a first transmission having a first HP ID on a TO among the one or more TOs and a second transmission having:
the first HP ID if a time difference between a timing of the second transmission and the first TO is smaller than a minimum time period for reusing the HP ID, or a second HP ID if the time difference between the timing of the second transmission and the first TO is greater than the minimum time period for reusing the HP ID.
